# EUROPÄISCHE PATENTSCHRIFT

(11) **EP 4 515 130 B1**
(45) Veröffentlichungstag und Bekanntmachung des Hinweises auf die Patenterteilung: **04.03.2026**
(21) Anmeldenummer: 23716829.9
(22) Anmeldetag: 31.03.2023
(51) Int. Cl.: F16K 31/06

(54) **MAGNETVENTIL MIT VERBESSERTER LUFTFÜHRUNG UND VERFAHREN ZU DESSEN HERSTELLUNG**
SOLENOID VALVE WITH IMPROVED AIRFLOW AND METHOD FOR THE PRODUCTION THEREOF
ÉLECTROVANNE AVEC FLUX D'AIR AMÉLIORÉ ET SON PROCÉDÉ DE PRODUCTION

(30) Priorität: 29.04.2022 DE 102022110447
(43) Veröffentlichungstag der Anmeldung: 05.03.2025
(73) Patentinhaber: KNORR-BREMSE Systeme für Nutzfahrzeuge GmbH, 80809 München (DE)
(72) Erfinder: HOFFMANN, Christoph, 71126 Gäufelden (DE); RÖTHER, Friedbert, 74389 Cleebronn (DE); KUNERT, Kevin, 71277 Rutesheim (DE)
(86) Internationale Anmeldenummer: PCT/EP2023/058528
(87) Internationale Veröffentlichungsnummer: WO 2023/208520

(56) Entgegenhaltungen:
- EP-A2- 0 418 502
- US-A1- 2020 018 417

## Beschreibung

Die vorliegende Erfindung bezieht sich auf ein Magnetventil mit verbesserter Luftführung und ein Verfahren zu dessen Herstellung und insbesondere auf ein 2/3-Wege-Ventil mit einer Luftführung über Bohrlöcher.

Magnetventile werden beispielsweise als 2/3-Wegeventile zur Drucksteuerung von Antiblockiersystemen (ABS) oder für Antriebsschlupfregelungen (ASR) in Nutzfahrzeugen bzw. Bussen eingesetzt. Diese Magnetventile sind einer intensiven Beanspruchung während des Betriebes ausgesetzt und sollen über viele Betätigungen zuverlässig funktionieren.

Herkömmliche Magnetventile zeigen jedoch wegen der hohen Beanspruchung mit der Zeit einen deutlichen Verschleiß auf, sodass ein zuverlässiges Schalten (Öffnen und/oder Schließen) nicht mehr oder nur noch unzureichend möglich ist. Insbesondere kommt es aufgrund der plötzlichen Schaltvorgänge und der dabei auftretenden hohen Kräfte, die unter anderem durch die Druckunterschiede verursacht werden, häufig zu mechanischen Abnutzungen an den Ventilsitzen und/oder den Verschlussteilen. Dieser Verschleiß kann sich durch die Luftführung, d.h. durch das Umlenken der Luftströme innerhalb des Ventils, noch verstärken. Bei herkömmlichen Ventilen hat sich gezeigt, dass die genutzten Teile den starken Luftströmen auf Dauer oft nur unzureichend standhalten können.

Ein herkömmliches Magnetventil ist aus US 2020/0018417 A1 bekannt.

Daher besteht ein Bedarf nach alternativen Konstruktionen für Magnetventile, die einerseits eine einfache Herstellung ermöglichen und anderseits eine zuverlässige Arbeitsweise während der gesamten Lebensdauer sicherstellen können.

Zumindest ein Teil der obengenannten Probleme wird durch ein Magnetventil nach Anspruch 1 und ein Herstellungsverfahren nach Anspruch 12 gelöst. Die abhängigen Ansprüche definieren weitere vorteilhafte Ausführungsformen der Gegenstände der unabhängigen Ansprüche.

Die vorliegende Erfindung bezieht sich auf ein Magnetventil mit einem ersten Anschluss, einem zweiten Anschluss und einem dritten Anschluss. Das Magnetventil umfasst zumindest ein Verschlussteil zum Öffnen und Schließen des ersten Anschlusses und des zweiten Anschlusses, einen Anker zum Bewegen des zumindest einen Verschlussteiles und eine Spule zum Bewegen des Ankers. Der Anker erstreckt sich zylinderförmig um das zumindest eine Verschlussteil herum. Der Anker weist einen axial über das zumindest eine Verschlussteil hervorstehenden Abschnitt mit einer Durchgangsöffnung und einen axial verlaufenden Seitenkanal (z.B. eine Nut) auf, um einen Luftstrom von dem ersten Anschluss zu dem dritten Anschluss zu leiten. Auf diese Weise wird das Magnetventil zu einem 3/2-Wege-Magnetventil.

Eine Durchgangsöffnung kann als eine Passage für einen Luftstrom definiert werden, die in einem Querschnitt senkrecht zu einem Luftstrom einen geschlossenen Rand aufweist. Es ist also keine Einkerbung oder Einschnitt, sondern z.B. eine Bohrung oder Stanzung. Das Verschlussteil kann einteilig oder mehrteilig ausgebildet sein und als Dichtpille(n) dienen und die entsprechende Ventilsitze zuverlässig abdichten. Sie können flach oder konisch zulaufend ausgebildet sein, um ein gute Abdichtung zu erreichen. Die Bewegungsrichtung des Ankers definiert eine axiale Richtung.

Optional umfasst das Magnetventil einen Kern, in dem der erste Anschluss als Durchgangsöffnung ausgebildet ist und einen Ventilsitz bildet. Der Anker kann dann eine (teilweise) geschlossene Stirnfläche zu dem Kern aufweisen. Optional kann die Stirnfläche des Anker einen Konus bilden. Der Kern kann optional auf der dem Anker zugewandten Seite einen Innenkonus bilden. Dadurch wird eine Magnetfläche vergrößert. Der Innenkonus des Kerns und/oder der Konus des Ankers können jeweils durch zwei abgewinkelte Bereiche gebildet sein.

Mit dieser Ausgestaltung können die folgenden technische Effekte erzielt werden. Zunächst ändert sich die Führung der Magnetfeldlinien. Die Doppelkonusgeometrie von Kern und Anker führt dazu, dass die Magnetkraft für kleine Abstände zwischen Anker und Kern sich eher verringert, dafür aber bei größeren Abständen von Kern und Anker zunimmt. Dies wirkt sich positiv auf das Schaltverhalten des Ventils aus, da das Ventil zuverlässig geschlossen werden kann, ohne dass beim Auftreffen des Verschlussteiles auf den Ventilsitz am Kern zu hohe Kräfte wirken. Im Vergleich zu konventionellen Ankern, die eine geschlitzte Ankergeometrie (d.h. keine Durchgangslöcher aufweisen), vergrößert sich somit die Magnetkraft bei größeren Abständen auch aufgrund der durchgehenden Stirnfläche des Ankers hin zu dem Kern. Durch die geschlossene Polfläche am Anker wird die Magnetkraft generell höher, was zusätzlich zu einem sicheren Bewegen des Ankers durch die Spule beiträgt. Insgesamt kann somit durch die Kennlinienbeeinflussung bei größeren Abständen zwischen Kern und Anker eine höhere Magnetkraft erreicht werden. Dadurch ist eine Bewegung des Ankers durch die Spule auch bei größeren Abständen zwischen Kern und Anker gewährleistet. Es kann somit sichergestellt werden, dass die Magnetkraft auch bei großem Abstand größer ist als die Federkraft der Druckfeder zwischen Anker und Kern.

Optional umfasst das zumindest eine Verschlussteil ein erstes Verschlussteil und ein zweites Verschlussteil. Das erste Verschlussteil koppelt an den Anker und öffnet oder schließt den ersten Anschluss auf eine Bewegung des Ankers. Das zweite Verschlussteil koppelt an den Anker und schließt oder öffnet den zweiten Anschluss auf eine Bewegung des Ankers. Das Magnetventil kann dann weiter zumindest eine Dämpfungsfeder aufweisen, die zwischen dem ersten Verschlussteil und dem zweiten Verschlussteil angeordnet und ausgebildet ist, das Schließen des ersten Anschlusses und/oder des zweiten Anschlusses abzufedern.

Die Durchgangsöffnung kann eine erste Durchgangsöffnung sein und der Anker kann optional eine zweite Durchgangsöffnung in einem Bereich aufweisen, der axial zwischen dem ersten Verschlussteil und dem zweiten Verschlussteil ausgebildet ist, um einen Druckausgleich zwischen einem Innenbereich des zylinderförmigen Ankers und dem dritten Anschluss bereitzustellen.

Optional sind die erste Durchgangsöffnung und die zweite Durchgangsöffnung baugleiche Bohrungen. Baugleich kann heißen, dass sie mit einem gleichen Werkzeug (z.B. Bohrer) herstellbar sind und sich daher - abgesehen von der Position - nicht unterscheiden. Optional können auch mehrere erste Durchgangsöffnungen und/oder mehrere zweite Durchgangsöffnungen ausgebildet sein, um den Luftstrom besser zu verteilen.

Optional umfasst das erste und das zweite Verschlussteil jeweils einen Kopf-Schulter-Bereich zum Schließen des zugehörigen ersten oder des zweiten Anschlusses. Der Anker kann einen radial in den Innenraum ragenden Vorsprung und an einem gegenüberliegenden Ende eine ringförmige Ausnehmung mit einem Anschlagelement aufweisen. Der Vorsprung kann ausgebildet sein, um einen Anschlag für den Kopf-Schulter-Bereich des ersten Verschlussteils zu bilden. Die Ausnehmung kann ausgebildet sein, um nach dem Einsetzen des ersten Verschlussteils, der Dämpfungsfeder und des zweiten Verschlussteils das zweite Verschlussteil bezüglich der axialen Richtung durch das Anschlagelement zu fixieren.

Optional ist das Anschlagelement eine Scheibe, die innerhalb der Ausnehmung durch eine Randstauchung des Ankers fixiert ist. Es muss aber keine durchgehende Scheibe sein. Es reicht aus, wenn ein axialer Anschlag für das zweite Verschlussteil gebildet wird. Es soll aber nicht vollständig fixiert werden.

Das erste Verschlussteil kann außerdem baugleich zu dem zweiten Verschlussteil sein. Das bietet den Vorteil, dass nur eine Art von Verschlussteilen hergestellt werden braucht. Nach dem Einsetzen sind die beiden Verschlussteile nur um 180° relativ zueinander verdreht. Dadurch wird eine einfache und kostengünstige Herstellung ermöglicht. Zwischen dem ersten Verschlussteil und dem zweiten Verschlussteil braucht nur eine Dämpfungsfeder angeordnet zu sein, die das erste Verschlussteil und das zweite Verschlussteil voneinander wegdrückt.

Das Magnetventil kann eine Kammer aufweisen, in die der Anker zusammen mit dem zumindest einen Verschlussteil linear bewegbar sind und der erste, zweiten und dritten Anschluss eine Verbindung in die Kammer bereitstellen (z.B. über äußere Anschlussteile). In einem bestromten Zustand der Spule kann das zumindest eine Verschlussteil den ersten Anschluss schließen und eine fluide Verbindung über die Kammer zwischen dem zweiten Anschluss und dem dritten Anschluss herstellen. In einem unbestromten Zustand der Spule kann das zumindest eine Verschlussteil den zweiten Anschluss schließen und eine fluide Verbindung über die Kammer zwischen dem ersten Anschluss und den dritten Anschluss herstellen.

Ausführungsbeispiele beziehen sich auch auf ein Verfahren zur Herstellung eines zuvor definierten Magnetventils, welches einen ersten Anschluss, einen zweiten Anschluss, einen dritten Anschluss, einen Anker mit einem zylindrischen Innenraum und eine Spule zum Bewegen des Ankers aufweist. Das Verfahren umfasst:
- Bereitstellen des Ankers mit einem Seitenkanal;
- Ausbilden einer Durchgangsbohrung durch den Anker; und
- Einbringen von zumindest einem Verschlussteil in den Anker,
wobei nach dem Schritt des Einbringens der Anker einen axial über das zumindest eine Verschlussteil hervorstehenden Abschnitt aufweist und die Durchgangsbohrung in dem hervorstehenden Abschnitt ausgebildet wird, um einen Luftstrom von dem ersten Anschluss zu dem dritten Anschluss zu leiten.

Optional ist die Durchgangsbohrung eine erste Durchgangsbohrung und das zumindest eine Verschlussteil umfasst ein erstes Verschlussteil und ein zweites Verschlussteil. Das Verfahren kann dann weiter ein Ausbilden einer zweiten Durchgangsbohrung in einem Bereich des Ankers umfassen, der axial zwischen dem ersten Verschlussteil und dem zweiten Verschlussteil liegt. Hierbei kann das gleiche Werkzeug genutzt werden.

Es versteht sich, dass alle zuvor beschriebenen Merkmale des Magnetventils durch weitere optionale Verfahrensschritte ausgebildet werden können. Außerdem versteht es sich, dass die Reihenfolge der Nennung der Schritte nicht notwendigerweise eine Reihenfolge bei der Ausführung der Verfahrensschritte ist. Die Schritte können auch in einer anderen Reihenfolge ausgeführt werden bzw. es wird nur ein Teil der Verfahrensschritte ausgeführt.

Ausführungsbeispiele der vorliegenden Erfindung überwinden die eingangs genannten Probleme durch die Nutzung von Bohrungen, die in (nur) einem Arbeitsschritt ausgebildet werden können und die Stabilität des Ankers nicht beeinträchtigen. Bei Schlitzen und Einkerbungen könnte es stattdessen zu einer Gratbildung kommen, welche aufwendig entfernt werden müsste.

Wenn mehrere Verschlussteile zum Einsatz kommen, bietet die (nur) eine Feder den Vorteil, dass der Anschlag beider Verschlussteile an den Ventilsitzen gedämpft wird. Dies wird zum Beispiel dadurch möglich, dass der Verschluss beider Anschlüsse auf gegenüberliegenden Seiten erfolgt, was mittels einer einfachen Druckfeder gedämpft werden kann.

Ausführungsbeispiele bieten weiter den Vorteil, dass die doppelte Dämpfung die Lebensdauer des Magnetventils deutlich erhöht. Es treten weniger Schäden auf und das Öffnen und Schließen geschieht mit hoher Präzession. Daher sind die Magnetventile für Anwendungen geeignet, die eine hohe Anzahl von Schaltvorgängen erfordern wie es beispielsweise bei ABS Magnetventilen der Fall ist.

Ein weiterer Vorteil von Ausführungsbeispielen besteht darin, dass beiden Verschlussteile ein gleiches Design aufweisen können und somit austauschbar gefertigt werden können. Dadurch wird die Herstellung deutlich vereinfacht und verbilligt. Eine Kosteneinsparung wird darüber hinaus dadurch erreicht, dass weniger Teile infolge der Doppeldämpfung erforderlich sind.

Das gleiche gilt für das Ausbilden der Durchgangsöffnungen, die durch gleichartige Bohrungen ausgebildet werden können, da sowohl die Durchgangsöffnung in dem zentralen Bereich zwischen den beiden Verschlussteilen als auch in dem oberen Endbereich in einem gleichen Arbeitsschritt mit einem gleichen Werkzeug hergestellt werden können. Die äußere Nut entlang des Ankers kann gemäß Ausführungsbeispielen bereits in dem Vormaterial (Stangen-Material) vorhanden sein, welches ebenfalls den Fertigungsprozess und die Fertigungsdauer verkürzt.

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.
- Fig. 1: zeigt ein Magnetventil gemäß einem Ausführungsbeispiel der vorliegenden Erfindung.
- Fig. 2: zeigt ein schematisches Flussdiagramm für ein Herstellungsverfahren für ein Magnetventil aus der Fig. 1.

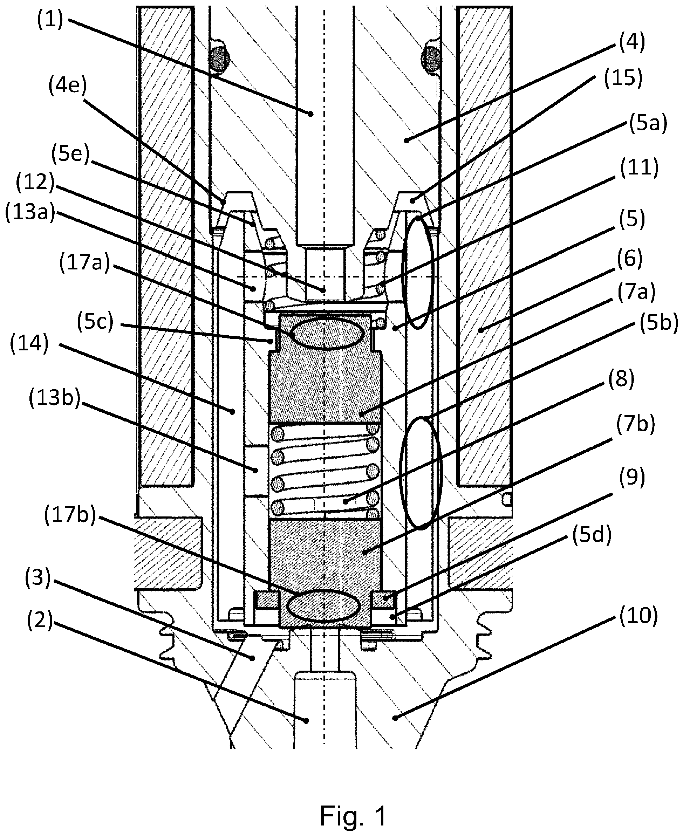

**Fig. 1** zeigt ein Magnetventil mit verbesserter Dämpfung gemäß einem Ausführungsbeispiel der vorliegenden Erfindung. Bei dem gezeigten Ventil handelt es sich um ein 3/2-Wegeventil, welches mittels zwei Schaltstellungen, drei Anschlüsse wahlweise miteinander verbinden kann. Hierzu umfasst das Magnetventil einen ersten Anschluss 1, einen zweiten Anschluss 2, einen dritten Anschluss 3, einen Anker 5, eine Spule 6, ein erstes und ein zweites Verschlussteil 7a, 7b, und eine Dämpfungsfeder 8. Die Spule 6 dient zum Bewegen des Ankers 5 (durch Magnetkräfte). Das erste Verschlussteil 7a koppelt an den Anker 5 und öffnet oder schließt den ersten Anschluss 1, wenn der Ankers 5 durch die Spule 6 bewegt wird. Das zweite Verschlussteil 7b koppelt auch an den Anker 5 und öffnet oder schließt den zweiten Anschluss 2, wenn die Spule 6 den Anker 5 bewegt. Die Dämpfungsfeder 8 ist zwischen dem ersten Verschlussteil 7a und dem zweiten Verschlussteil 7b angeordnet. Beim Schließen des ersten Anschlusses 1 und/oder beim Schließen des zweiten Anschlusses 2 federt die Dämpfungsfeder 8 den Anstoß (oder Aufprall) an dem entsprechenden Ventilsitz. Sie verbessert somit die Dämpfung und schützt die Verschlussteile 7a, 7b bzw. die Ventilsitze an den Anschlüssen 1, 2.

Die Spule 6 kann beispielsweise in einem Ventilkörpergehäuse 10 untergebracht sein und sich zylindrisch um einen Kern 4 und den Anker 5 erstrecken. Der Kern 4 kann beispielsweise fest innerhalb der Spule 6 angeordnet sein und als Durchgangsöffnung den ersten Anschluss 1 bereitstellen. Der Anker 5 ist in axialer Richtung (vertikal in der Fig. 1) verschiebbar, wobei zwischen dem Kern 4 und dem Anker 5 eine Druckfeder 11 vorhanden ist, die eine Vorspannung erzeugt. Der Anker 5 kann beispielsweise einen hervorstehenden Abschnitt 5a aufweisen, der axial über das erste Verschlussteil 7a hinausragt und einen zylindrischen Innenbereich definiert, in dem die Druckfeder 11 geführt wird und der einen Ventilsitz 12 des ersten Anschlusses 1 aufnimmt. Ein weiterer Vorteil des hervorstehenden Abschnitt 5a des Ankers 5 ist somit, dass dadurch der Bauraum für die Druckfeder 11 zwischen dem Anker 5 und dem Kern 4 gegeben ist. Das macht die Baugruppe kompakter. Bei herkömmlichen Magnetventilen befindet sich die Druckfeder außen am Anker und braucht somit zusätzlichen Bauraum. Auch eine lange Nut im Kern 4 zwischen Ventilsitz und Polfläche wäre fertigungstechnisch viel aufwendiger als der hervorstehenden Abschnitt 5a des Ankers 5, wie er in Ausführungsbeispielen ausgebildet ist.

Das erste und das zweite Verschlussteil 7a, 7b können sich relative zum Anker 5 durch ein Zusammendrücken der Dämpfungsfeder 8 bewegen. Diese Bewegung ist aber axial in beiden Richtungen durch einen Anschlag begrenzt. Hierzu umfassen das erste und das zweite Verschlussteil 7a, 7b jeweils einen verengten Bereich 17a, 17b, der eine Schulter-Kopf-Bereich bildet, wobei der Kopfabschnitt zum Schließen der zugehörigen ersten oder zweiten Öffnung 1, 2 dient und die Schulter als Anschlag dient.

Außerdem umfasst der Anker 5 einen radial in den Innenraum ragenden Vorsprung 5c, der den Anschlag für den Schulterabschnitt 17a des ersten Verschlussteils 7a bildet. An diesem Innenvorsprung 5c kann auch die Druckfeder 11 angreifen und den Anker 5 von dem Kern 4 wegdrücken. An einem gegenüberliegenden Ende ist in dem Anker 5 eine ringförmige Ausnehmung 5d gebildet. Die ringförmige Ausnehmung 5d ist zusammen mit dem Kopf-Schulter-Bereich 17b des zweiten Verschlussteils 7b derart gebildet, dass dort eine beispielhafte Scheibe 9 eingesetzt werden kann, die beispielsweise mittels einer Stauchung des Ankers 5 einfach fixiert wird. Dann sind beide Verschlussteile 7a, 7b durch einen axialen Anschlag in dem Anker 5 fixiert.

Im stromlosen Zustand der Spule 6 drückt die Druckfeder 11 den Anker 5 von dem Kern 4 weg. Dadurch öffnet das erste Verschlussteil 7a den ersten Anschluss 1, da das erste Verschlussteil 7a durch den Anschlag 5c mitbewegt wird. Gleichzeitig reicht die Vorstellkraft der Druckfeder 11 aus, um den Anker 5 soweit zu bewegen bis der Anker 5 den gegenüberliegenden zweiten Anschluss 2 durch das zweite Verschlussteil 7b schließt. Das Aufsetzen des zweiten Verschlussteils 7b auf den zweiten Anschluss 2 wird dabei über die Dämpfungsfeder 8 gedämpft.

Wenn die Spule 6 bestromt und somit ein Magnetfeld erzeugt wird, wird der Anker 5 entgegen der Federspannung der Druckfeder 11 magnetisch in Richtung zu dem Kern 4 gezogen, und zwar solange bis das erste Verschlussteil 7a den ersten Anschluss 1 schließt. In diesem Fall überträgt der Anschlag durch die Scheibe 9 die Kraft von dem Anker 5 auf das zweite Verschlussteil 7b, welches über die Dämpfungsfeder 8 die Kraft auf das erste Verschlussteil 7a überträgt. Die Druckkraft beim Schließen des ersten Anschlusses 1 ist somit auf die Federkraft der Dämpfungsfeder 8 begrenzt und schützt somit das Magnetventil.

Als Folge dieser Bewegung wird entweder der zweite Anschluss 2 oder der erste Anschluss 1 geöffnet bzw. geschlossen. Wenn der zweite Anschluss 2 offen ist (bestromter Zustand), besteht eine fluide Verbindung zwischen dem dritten Anschluss 3 und dem zweiten Anschluss 2. Der dritte Anschluss 3 kann neben dem zweiten Anschluss 2 im Ventilkörper 10 in einem Bodenabschnitt ausgebildet sein. Dann sind keine weiteren Vorkehrungen zur Luftführung zwischen dem zweiten und den dritten Anschluss 2, 3 erforderlich.

Fig. 1 zeigt nur die Schaltstellung mit geöffneten ersten Anschluss 1. Zur Leitung des Luftstromes vom ersten Anschluss 1 in den Innenraum des Ventilgehäuses 10 weist der Anker 5 zumindest zwei Durchgangsöffnungen 13 und zumindest einen Seitenkanal 14 auf (z.B. als Nut gebildet). Die zumindest zwei Durchgangsöffnungen 13 verbinden einem Innenbereich des Ankers 5 und dem Seitenkanal 14 und stellen eine fluide Verbindung zwischen dem ersten Anschluss 1 und dem dritten Anschluss 3 bereit. Beispielsweise ist zumindest eine erste Durchgangsöffnung 13a in dem hervorstehenden Abschnitt 5a und zumindest eine zweite Durchgangsöffnung 13b in einem Bereich 5b des Ankers 5 ausgebildet, der axial zwischen dem ersten Verschlussteil 7a und dem zweiten Verschlussteil 7b sich befindet. Die zumindest eine zweite Durchgangsöffnung 13b stellt einen Druckausgleich zwischen dem Innenbereich des Ankers 5 und dem dritten Anschluss 3 bereit. Die zweite(n) Durchgangsöffnung(en) 13b befinden sich axial auf der Höhe der Dämpfungsfeder 8 und verringern aufgrund des Druckausgleiches den Verschleiß an dem ersten Verschlussteil 7a und dem zweiten Verschlussteil 7b.

Gemäß Ausführungsbeispielen umfasst der Anker 5 eine (teilweise) geschlossene Stirnfläche 5e, die dem Kern 4 zugewandt ist. Die Stirnfläche 5e des Ankers 5 bildet beispielweise einen Konus. Der Kern 4 kann analog dazu auf der dem Anker 5 zugewandten Seite einen Innenkonus 4e bilden. Damit wird eine Magnetfläche vergrößert. Insbesondere können der Innenkonus 4e des Kerns 4 und der Konus 5e des Ankers 5 jeweils zwei abgewinkelte Bereiche bilden. Die Stirnfläche des Ankers 5 bildet auf diese Weise eine ganz oder teilweise geschlossen Ankerfläche gegenüber der Polfläche des Kerns 4. Im Vergleich zu konventionellen Ankern mit geschlitzten Polflächen wird die Magnetkraft durch die größere Polfläche gemäß Ausführungsbeispiele erhöht.

Die beiden Polflächen können insbesondere als Doppelkonus bzw. durch abgewinkelte Bereiche ausgeführt sein (siehe Fig. 1), um die zusätzlichen Magnetflächen zu generieren. Durch die beiden so gebildeten Polflächen wird die Fläche des Ankers 5 gegenüber dem Kern 4 und somit die Magnetkraft bei größerem Luftspalt zusätzlich vergrößert, da die Ankerkennlinie durch diese Geometrie positiv beeinflusst wird.

Es versteht sich, dass mehrere Durchgangsöffnungen 13 und/oder mehrere Seitenkanäle vorhanden sein können, um die Luftströme infolge der beträchtlichen Druckverhältnisse möglichst gleichmäßig auf den Innenraum zu verteilen. Der zweite Anschluss 2 und der dritte Anschluss 3 können als Durchgangsöffnungen in dem Ventilkörpergehäuse 10 ausgebildet sein. In dem Ventilkörper 10 kann optional auch der Kern 4 axial beweglich sein, wobei dessen axiale Bewegung über eine separate Steuerung bewirkt werden kann.

In dem gezeigten Ausführungsbeispiel ist im Ruhezustand (stromlose Spule) somit der zweite Anschluss 2 geschlossen.

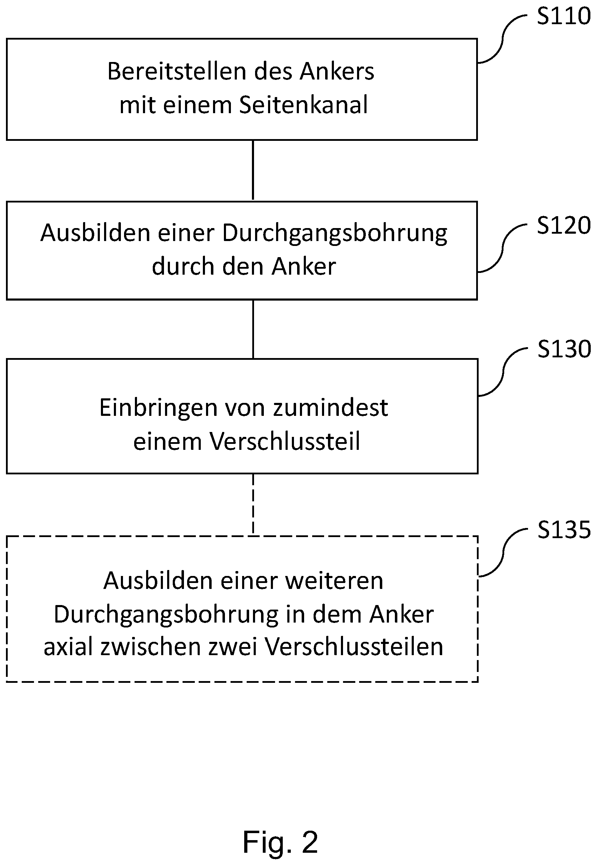

**Fig. 2** zeigt schematisch ein Flussdiagramm für ein Verfahren zur Herstellung eines der zuvor beschriebenes Magnetventile. Das Verfahren umfasst:
- Bereitstellen S110 des Ankers 5 mit einem Seitenkanal 14;
- Ausbilden S120 einer Durchgangsbohrung 13 durch den Anker 5; und
- Einbringen S130 von zumindest einem Verschlussteil 7; 7a, 7b in den Anker.

Die Schritte werde derart ausgeführt, dass der Anker 5 nach dem Schritt des Einbringens S130 einen axial über das zumindest eine Verschlussteil 7; 7a, 7b hervorstehenden Abschnitt 5a aufweist und die Durchgangsbohrung 13 in dem hervorstehenden Abschnitt 5a ausgebildet ist, um einen Luftstrom von dem ersten Anschluss 1 zu dem dritten Anschluss 3 zu leiten.

Die Durchgangsbohrung 13 kann eine erste Durchgangsbohrung 13a sein und das zumindest eine Verschlussteil 7a, 7b kann ein erstes Verschlussteil 7a und ein zweites Verschlussteil 7b umfassen. Optional kann das Verfahren dann weiter ein Ausbilden S135 einer zweiten Durchgangsbohrung 13b in einem Bereich 5b des Ankers 5 umfassen, der axial zwischen dem ersten Verschlussteil 7a und dem zweiten Verschlussteil 7b liegt.

Optional umfasst das Verfahren als weiteren Verfahrensschritt ein Ausbilden S135 eines Anschlages für das zweite Verschlussteil 7b, um ein Fixieren der ersten Verschlussteil 7a, das zweiten Verschlussteil 7b und dazwischen angeordneten Dämpfungsfedern 8 innerhalb des zylindrischen Hohlraumes des Ankers 5 sicherzustellen. Das Ausbilden des Anschlages kann beispielsweise das Einlegen der Scheibe 9 und eine Randstauchung des Ankers 5 umfassen. Danach ist die Scheibe 9 nicht mehr ohne eine Zerstörung aus der Vertiefung entfernbar.

Es versteht sich, dass alle zuvor beschriebenen andern Merkmale des Magnetventils als weitere optionale Verfahrensschritte bei der Herstellung ausgeführt werden können. Außerdem versteht es sich, dass die Reihenfolge der Nennung nicht notwendigerweise eine Reihenfolge bei der Ausführung der Verfahrensschritte ist. Die Schritte können auch in einer anderen Reihenfolge ausgeführt werden bzw. es wird nur ein Teil der Verfahrensschritte ausgeführt.

Die Montage und Medienführung können wie folgt zusammengefasst werden:
Die Reihenfolge der Montage kann daher wie folgt geschehen: zunächst wird der zylinderförmige Anker 5 bereitgestellt, in welchem das erste Verschlussteil 7a eingesetzt wird. Das erste Verschlussteil 7a umfasst einen Kopfbereich und einen Schulterbereich, wobei an dem Schulterbereich die radial nach innen ragenden Vorsprüngen 5c des Ankers 5 eingreifen und einen Anstoß bieten, so dass das erste Verschlussteil 7a nur bis zu den radialen Vorsprüngen bewegbar ist. Danach kann die Dämpfungsfeder 8 in den zylindrischen Anker 5 eingesetzt werden. Schließlich wird das zweite Verschlussteil 7b auf die Dämpfungsfeder 8 aufgesetzt. Zum Schluss wird die Scheibe 9 eingesetzt. Da auch das zweite Verschlussteil 7b einen Schulterabschnitt und einen Kopfabschnitt aufweist, stößt die Scheibe an den Schulterbereich an und bietet somit für das zweite Verschlussteil 7b einen Anschlag. Hierzu umfasst der Anker 5 die umfängliche Ausnehmung 5d, in die die Scheibe 9 einsetzbar ist. Nach der Stauchung des Ankers 5 an einem axialen Ende ist ein Herausnehmen der Scheibe 9 und somit das zweite Verschlussteil 7b aus dem Innenraum des Ankers 5 nicht mehr möglich, da eine Deformation des axialen Endes des Ankers 5 ein Herausnehmen der Scheibe 9 verhindert. Daran anschließend kann der Anker zusammen mit dem Kern 4 in dem Innenraum des Ventilgehäuses 10 eingesetzt werden und nach einer Fixierung des Kerns 9 ist das Magnetventil einsatzbereit.

Die Luftbewegung in den einzelnen Schaltstellungen erfolgt entlang der Durchgangsöffnungen 13 und der äußeren Nuten 14. Hierzu sind entlang der äußeren zylindrischen Oberfläche des Ankers 5 eine oder mehrere Nuten 14 vorgesehen, die einen axialen Luftstrom in oder von dem dritten Anschluss 3 erlauben. Die Medienführung (Luft) geht daher vom ersten Anschluss 1 zu dem dritten Anschluss 3 durch den Kernventilsitz 12 und wird durch die Querbohrung 13 im Anker 5 geleitet. Von der Querbohrung 13 im Anker 5 geht die Luftführung weiter über die genannten äußeren Nuten zu dem dritten Anschluss 3.

Ein Vorteil dieser Luftführung besteht darin, dass die äußeren Nuten 14 des Ankers 5 bereits im Vormaterial vorhanden sein können und nicht separat gefertigt werden müssten. So kann dies beispielsweise noch vor dem Herstellen des Ankers 5 durch einen Drehprozess ausgebildet sein. Hierdurch wird Prozesszeit und damit auch Kosten eingespart. Die Querbohrung 13 im Anker 5 ermöglicht die Luftführung sowohl von innen nach außen als auch von außen nach innen. Außerdem können die Querbohrungen 13, die zur Luftführung zwischen dem ersten Anschluss 1 und dem dritten Anschluss 3 dienen, baugleich sein zu der Querbohrung 13b, die einen Druckausgleich zwischen dem ersten Verschlussteil 7a und dem zweiten Verschlussteil 7b herstellen.

Die in der Beschreibung, den Ansprüchen und den Figuren offenbarten Merkmale der Erfindung können sowohl einzeln als auch in beliebiger Kombination für die Verwirklichung der Erfindung wesentlich sein, insofern sie in den Schutzbereich der Ansprüche fallen.

### BEZUGSZEICHENLISTE

- 1, 2, 3: Anschlüsse
- 4: Kern
- 4e: (Innen-) Konusabschnitt
- 5: Anker
- 5a,5b,5c,5d,5e: Abschnitte vom Anker
- 6: Spule
- 7, 7a, 7b,: Verschlussteil(e)
- 8: Dämpfungsfeder
- 9: Scheibe
- 10: Gehäusekörper
- 11: Druckfeder
- 12: Ventilsitz (Kern)
- 13, 13a, 13b: Durchgangsöffnungen
- 14: Seitenkanal, Nut
- 15: Kammer (Innenraum)
- 17a,17b: verengte Bereich (Schulter-Kopf-Bereich/-Abschnitt)

## Patentansprüche

1. Magnetventil mit einem ersten Anschluss (1), einem zweiten Anschluss (2) und einem dritten Anschluss (3), das Magnetventil umfasst
- zumindest ein Verschlussteil (7; 7a, 7b) zum Öffnen und Schließen des ersten Anschlusses (1) und des zweiten Anschlusses (2);
- einen Anker (5) zum Bewegen des zumindest einen Verschlussteiles (7; 7a, 7b), wobei der Anker (5) sich zylinderförmig um das zumindest eine Verschlussteil (7; 7a, 7b) herum erstreckt; und
- eine Spule (6) zum Bewegen des Ankers (5), **dadurch gekennzeichnet, dass** der Anker (5) einen axial über das zumindest eine Verschlussteil (7; 7a, 7b) hervorstehenden Abschnitt (5a) mit einer Durchgangsöffnung (13a) und einen axial verlaufenden Seitenkanal (14) aufweist, um einen Luftstrom von dem ersten Anschluss (1) zu dem dritten Anschluss (3) zu leiten.

2. Magnetventil nach Anspruch 1, das weiter einen Kern (4) aufweist, in dem der erste Anschluss (2) als Durchgangsöffnung ausgebildet ist,
**dadurch gekennzeichnet, dass**
der Anker (5) eine geschlossene Stirnfläche (5e) aufweist, die dem Kern (4) zugewandt ist.

3. Magnetventil nach Anspruch 2,
**dadurch gekennzeichnet, dass**
die Stirnfläche (5e) des Anker (5) einen Konus bildet und der Kern (4) auf der dem Anker (5) zugewandten Seite einen Innenkonus (4e) bildet, um eine Magnetfläche zu vergrößern.

4. Magnetventil nach Anspruch 3,
**dadurch gekennzeichnet, dass**
der Innenkonus (4e) des Kerns (4) und der Konus (5e) des Ankers (5) jeweils durch zwei abgewinkelte Bereiche gebildet sind.

5. Magnetventil nach einem der vorhergehenden Ansprüche,
**dadurch gekennzeichnet, dass**
das zumindest eine Verschlussteil (7a, 7b) ein erstes Verschlussteil (7a) und ein zweites Verschlussteil (7b) aufweist, wobei das erste Verschlussteil (7a) an den Anker (5) koppelt und auf einer Bewegung des Ankers (5) den ersten Anschluss (1) öffnet oder schließt und das zweite Verschlussteil (7b) an den Anker (5) koppelt und auf einer Bewegung des Ankers (5) den zweiten Anschluss (2) schließt oder öffnet;
**und dass** das Magnetventil weiter
zumindest eine Dämpfungsfeder (8) aufweist, die zwischen dem ersten Verschlussteil (7a) und dem zweiten Verschlussteil (7b) angeordnet und ausgebildet ist, das Schließen des ersten Anschlusses (1) und/oder des zweiten Anschlusses (2) abzufedern.

6. Magnetventil nach Anspruch 5, wobei die Durchgangsöffnung (13a) eine erste Durchgangsöffnung (13a) ist,
**dadurch gekennzeichnet, dass**
der Anker (5) eine zweite Durchgangsöffnung (13b) in einem Bereich (5b) aufweist, der axial zwischen dem ersten Verschlussteil (7a) und dem zweiten Verschlussteil (7b) ausgebildet ist, um einen Druckausgleich zwischen einem Innenbereich des zylinderförmigen Ankers (5) und dem dritten Anschluss (3) bereitzustellen.

7. Magnetventil nach Anspruch 6,
**dadurch gekennzeichnet, dass**
die erste Durchgangsöffnung (13a) und die zweite Durchgangsöffnung (13b) baugleiche Bohrungen sind.

8. Magnetventil nach einem der Ansprüche 5 bis 7,
**dadurch gekennzeichnet, dass**
- das erste und das zweite Verschlussteil (7a, 7b) jeweils einen Kopf-Schulter-Bereich (17a, 17b) zum Schließen des zugehörigen ersten oder des zweiten Anschlusses (1, 2) aufweist,
- der Anker (5) einen radial in den Innenraum ragenden Vorsprung (5c) und an einem gegenüberliegenden Ende eine ringförmige Ausnehmung (5d) mit einem Anschlagelement (9) aufweist, wobei der Vorsprung (5c) ausgebildet ist, um einen Anschlag für den Kopf-Schulter-Bereich (17a) des ersten Verschlussteils (7a) zu bilden und die Ausnehmung (5d) ausgebildet ist, um nach dem Einsetzen des ersten Verschlussteils (7a), der Dämpfungsfeder (8) und des zweiten Verschlussteils (7b) über das Anschlagelement (9) das zweite Verschlussteil (7b) bezüglich der axialen Richtung zu fixieren.

9. Magnetventil nach Anspruch 8,
**dadurch gekennzeichnet, dass**
das Anschlagelement (9) eine Scheibe (9) ist, die innerhalb der Ausnehmung (5d) durch eine Randstauchung des Ankers (5) fixiert ist.

10. Magnetventil nach einem der Ansprüche 5 bis 9,
**dadurch gekennzeichnet, dass**
das erste Verschlussteil (7a) baugleich zu dem zweiten Verschlussteil (7b) ist und zwischen dem ersten Verschlussteil (7a) und dem zweiten Verschlussteil (7b) nur eine Dämpfungsfeder (8) angeordnet ist, die das erste Verschlussteil (7a) und das zweite Verschlussteil (7b) voneinander wegdrückt.

11. Magnetventil nach einem der vorhergehenden Ansprüche, wobei das Magnetventil eine Kammer (15) aufweist, in die der Anker (5) zusammen mit dem zumindest einen Verschlussteil (7; 7a, 7b) linear bewegbar sind und der erste, zweiten und dritten Anschluss (1, 2, 3) eine Verbindung in die Kammer (15) bereitstellen,
**dadurch gekennzeichnet, dass**
- in einem bestromten Zustand der Spule (6) das zumindest eine Verschlussteil (7; 7a, 7b) den ersten Anschluss (1) schließt und eine fluide Verbindung über die Kammer (15) zwischen dem zweiten Anschluss (2) und dem dritten Anschluss (3) herstellt und
- in einem unbestromten Zustand der Spule (6) das zumindest eine Verschlussteil (7; 7a, 7b) den zweiten Anschluss (2) schließt und eine fluide Verbindung über die Kammer (15) zwischen dem ersten Anschluss (1) und den dritten Anschluss (3) herstellt.

12. Verfahren zur Herstellung eines Magnetventils, wobei das Magnetventil einen ersten Anschluss (1), einen zweiten Anschluss (2), einen dritten Anschluss (3), einen Anker (5) mit einem zylindrischen Innenraum und eine Spule (6) zum Bewegen des Ankers (5) aufweist, das Verfahren ist
**gekennzeichnet durch:**
- Bereitstellen (S110) des Ankers (5) mit einem axial verlaufenden Seitenkanal (14);
- Ausbilden (S120) einer Durchgangsbohrung (13) durch den Anker (5); und
- Einbringen (S130) von zumindest einem Verschlussteil (7; 7a, 7b) in den Anker, wobei der Anker (5) nach dem Schritt des Einbringens (S130) einen axial über das zumindest eine Verschlussteil (7; 7a, 7b) hervorstehenden Abschnitt (5a) aufweist und die Durchgangsbohrung (13) in dem hervorstehenden Abschnitt (5a) ausgebildet wird, um einen Luftstrom von dem ersten Anschluss (1) zu dem dritten Anschluss (3) zu leiten.

13. Verfahren nach Anspruch 12, wobei die Durchgangsbohrung (13a) eine erste Durchgangsbohrung (13a) ist und das zumindest eine Verschlussteil (7a, 7b) ein erstes Verschlussteil (7a) und ein zweites Verschlussteil (7b) umfasst,
**dadurch gekennzeichnet, dass** das Verfahren weiter umfasst:
Ausbilden (S135) einer zweiten Durchgangsbohrung (13b) in einem Bereich (5b) des Ankers (5), der axial zwischen dem ersten Verschlussteil (7a) und dem zweiten Verschlussteil (7b) liegt.

## Claims

1. Solenoid valve comprising a first connector (1), a second connector (2) and a third connector (3), the solenoid valve comprising
- at least one closure part (7; 7a, 7b) for opening and closing the first connector (1) and the second connector (2);
- an armature (5) for moving the at least one closure part (7; 7a, 7b), wherein the armature (5) extends cylindrically around the at least one closure part (7; 7a, 7b); and
- a coil (6) for moving the armature (5), **characterized in that** the armature (5) has a section (5a) protruding axially over the at least one closure part (7; 7a, 7b) and having a through-opening (13a) and an axially running side channel (14) in order to guide an air flow from the first connector (1) to the third connector (3).

2. Solenoid valve according to claim 1, which further has a core (4) in which the first connector (2) is designed as a through-opening,
**characterized in that**
the armature (5) has a closed end face (5e) which faces the core (4).

3. Solenoid valve according to claim 2,
**characterized in that**
the end face (5e) of the armature (5) forms a cone and the core (4) forms an inner cone (4e) on the side facing the armature (5) in order to increase a magnetic surface area.

4. Solenoid valve according to claim 3,
**characterized in that**
the inner cone (4e) of the core (4) and the cone (5e) of the armature (5) are each formed by two angled regions.

5. Solenoid valve according to any one of the preceding claims,
**characterized in that**
the at least one closure part (7a, 7b) has a first closure part (7a) and a second closure part (7b), wherein the first closure part (7a) couples to the armature (5) and opens or closes the first connector (1) in response to a movement of the armature (5) and the second closure part (7b) couples to the armature (5) and closes or opens the second connector (2) in response to a movement of the armature (5);
**and in that** the solenoid valve further
has at least one damping spring (8) which is arranged between the first closure part (7a) and the second closure part (7b) and is designed to cushion the closing of the first connector (1) and/or of the second connector (2).

6. Solenoid valve according to claim 5, wherein the through-opening (13a) is a first through-opening (13a),
**characterized in that**
the armature (5) has a second through-opening (13b) in a region (5b) which is formed axially between the first closure part (7a) and the second closure part (7b) in order to provide pressure equalization between an inner region of the cylindrical armature (5) and the third connector (3).

7. Solenoid valve according to claim 6,
**characterized in that**
the first through-opening (13a) and the second through-opening (13b) are identical bores.

8. Solenoid valve according to any one of claims 5 to 7,
**characterized in that**
- the first and second closure parts (7a, 7b) each have a head-shoulder region (17a, 17b) for closing the associated first or second connector (1, 2),
- the armature (5) has a projection (5c) projecting radially into the interior and, at an opposite end, an annular recess (5d) comprising a stop element (9), wherein the projection (5c) is designed to form a stop for the head-shoulder region (17a) of the first closure part (7a) and the recess (5d) is designed to fix the second closure part (7b) with respect to the axial direction via the stop element (9) after insertion of the first closure part (7a), the damping spring (8) and the second closure part (7b).

9. Solenoid valve according to claim 8,
**characterized in that**
the stop element (9) is a disk (9) which is fixed within the recess (5d) by an edge compression of the armature (5).

10. Solenoid valve according to any one of claims 5 to 9,
**characterized in that**
the first closure part (7a) is identical in construction to the second closure part (7b) and between the first closure part (7a) and the second closure part (7b) only one damping spring (8) is arranged, which pushes the first closure part (7a) and the second closure part (7b) away from each other.

11. Solenoid valve according to any one of the preceding claims, wherein the solenoid valve has a chamber (15) into which the armature (5) together with the at least one closure part (7; 7a, 7b) are linearly movable and the first, second and third connections (1, 2, 3) provide a connection into the chamber (15),
**characterized in that**
- in an energized state of the coil (6), the at least one closure part (7; 7a, 7b) closes the first connector (1) and establishes a fluid connection via the chamber (15) between the second connector (2) and the third connector (3), and
- in a de-energized state of the coil (6), the at least one closure part (7; 7a, 7b) closes the second connector (2) and establishes a fluid connection via the chamber (15) between the first connector (1) and the third connector (3).

12. Method for producing a solenoid valve, wherein the solenoid valve has a first connector (1), a second connector (2), a third connector (3), an armature (5) comprising a cylindrical interior and a coil (6) for moving the armature (5), which method is
**characterized by:**
- providing (S110) the armature (5) with an axially running side channel (14)
- forming (S120) a through bore (13) through the armature (5); and
- inserting (S130) at least one closure part (7; 7a, 7b) into the armature, wherein the armature (5), after the step of insertion (S130), has a section (5a) projecting axially over the at least one closure part (7; 7a, 7b) and the through bore (13) is formed in the projecting section (5a) in order to guide an air flow from the first connector (1) to the third connector (3).

13. Method according to claim 12, wherein the through bore (13a) is a first through bore (13a) and the at least one closure part (7a, 7b) comprises a first closure part (7a) and a second closure part (7b),
**characterized in that** the method further comprises:
forming (S135) a second through bore (13b) in a region (5b) of the armature (5) which lies axially between the first closure part (7a) and the second closure part (7b).

## Revendications

1. Électrovanne avec un premier raccord (1), un deuxième raccord (2) et un troisième raccord (3), l'électrovanne comprend
- au moins une pièce de fermeture (7 ; 7a, 7b) pour ouvrir et fermer le premier raccord (1) et le deuxième raccord (2) ;
- un induit (5) pour déplacer la au moins une pièce de fermeture (7 ; 7a, 7b), dans laquelle l'induit (5) s'étend en forme de cylindre autour d'au moins une pièce de fermeture (7 ; 7a, 7b) ; et
- une bobine (6) pour déplacer l'induit (5), **caractérisée en ce que** l'induit (5) présente une section (5a) faisant saillie axialement de la au moins une pièce de fermeture (7 ; 7a, 7b) avec une ouverture traversante (13a) et un canal latéral (14) s'étendant axialement pour diriger un flux d'air du premier raccord (1) vers le troisième raccord (3).

2. Électrovanne selon la revendication 1, qui présente en outre un noyau (4) dans lequel le premier raccord (2) est formé en tant qu'ouverture traversante,
**caractérisée en ce que**
l'induit (5) présente une surface frontale fermée (5e), qui est tournée vers le noyau (4).

3. Électrovanne selon la revendication 2,
**caractérisée en ce que**
la surface frontale (5e) de l'induit (5) forme un cône, et le noyau (4) forme un cône intérieur (4e) sur le côté tourné vers l'induit (5) pour agrandir une surface magnétique.

4. Électrovanne selon la revendication 3,
**caractérisée en ce que**
le cône intérieur (4e) du noyau (4) et le cône (5e) de l'induit (5) sont respectivement formés par deux zones coudées.

5. Électrovanne selon l'une quelconque des revendications précédentes,
**caractérisée en ce que**
la au moins une pièce de fermeture (7a, 7b) présente une première pièce de fermeture (7a) et une deuxième pièce de fermeture (7b), dans laquelle la première pièce de fermeture (7a) est couplée à l'induit (5) et ouvre ou ferme le premier raccord (1) lors d'un mouvement de l'induit (5), et la deuxième pièce de fermeture (7b) est couplée à l'induit (5) et ferme ou ouvre le deuxième raccord (2) lors d'un mouvement de l'induit (5) ;
**et en ce que** l'électrovanne présente en outre
au moins un ressort d'amortissement (8) qui est disposé entre la première pièce de fermeture (7a) et la deuxième pièce de fermeture (7b) et est conçu pour amortir la fermeture du premier raccord (1) et/ou du deuxième raccord (2).

6. Électrovanne selon la revendication 5, dans laquelle l'ouverture traversante (13a) est une première ouverture traversante (13a),
**caractérisée en ce que**
l'induit (5) présente une deuxième ouverture traversante (13b) dans une zone (5b) qui est formée axialement entre la première pièce de fermeture (7a) et la deuxième pièce de fermeture (7b) pour fournir une égalisation de pression entre une zone intérieure de l'induit en forme de cylindre (5) et le troisième raccord (3).

7. Électrovanne selon la revendication 6,
**caractérisée en ce que**
la première ouverture traversante (13a) et la deuxième ouverture traversante (13b) sont des alésages de construction identique.

8. Électrovanne selon l'une quelconque des revendications 5 à 7,
**caractérisée en ce que**
- les première et deuxième pièces de fermeture (7a, 7b) présentent respectivement une zone tête-épaulement (17a, 17b) pour fermer le premier ou le deuxième raccord (1, 2) correspondant,
- l'induit (5) présente une saillie (5c) s'étendant radialement dans l'espace intérieur et, à une extrémité opposée, un évidement annulaire (5d) avec un élément de butée (9), dans laquelle la saillie (5c) est conçue pour former une butée pour la zone tête-épaulement (17a) de la première pièce de fermeture (7a), et l'évidement (5d) est conçu pour fixer la deuxième pièce de fermeture (7b) par rapport à la direction axiale après l'introduction de la première pièce de fermeture (7a), du ressort d'amortissement (8) et de la deuxième pièce de fermeture (7b) par l'intermédiaire de l'élément de butée (9).

9. Électrovanne selon la revendication 8,
**caractérisée en ce que**
l'élément de butée (9) est un disque (9) qui est fixé à l'intérieur de l'évidement (5d) par un sertissage de bord de l'induit (5).

10. Électrovanne selon l'une quelconque des revendications 5 à 9,
**caractérisée en ce que**
la première pièce de fermeture (7a) est de construction identique à la deuxième pièce de fermeture (7b) et seul un ressort d'amortissement (8) est disposé entre la première pièce de fermeture (7a) et la deuxième pièce de fermeture (7b), ressort qui éloigne la première pièce de fermeture (7a) et la deuxième pièce de fermeture (7b) l'une de l'autre.

11. Électrovanne selon l'une quelconque des revendications précédentes, dans laquelle l'électrovanne présente une chambre (15) dans laquelle l'induit (5) et au moins une pièce de fermeture (7 ; 7a, 7b) sont mobiles, et les premier, deuxième et troisième raccords (1, 2, 3) fournissent une connexion dans la chambre (15),
**caractérisée en ce que**
- dans un état alimenté de la bobine (6), la au moins une pièce de fermeture (7 ; 7a, 7b) ferme le premier raccord (1) et établit une connexion fluidique par l'intermédiaire de la chambre (15) entre le deuxième raccord (2) et le troisième raccord (3) et
- dans un état non alimenté de la bobine (6), la au moins une pièce de fermeture (7 ; 7a, 7b) ferme le deuxième raccord (2) et établit une connexion fluidique par l'intermédiaire de la chambre (15) entre le premier raccord (1) et le troisième raccord (3).

12. Procédé de fabrication d'une électrovanne, dans lequel l'électrovanne présente un premier raccord (1), un deuxième raccord (2), un troisième raccord (3), un induit (5) avec un espace intérieur cylindrique et une bobine (6) pour déplacer l'induit (5), le procédé est
**caractérisé par** :
- la fourniture (S110) de l'induit (5) avec un canal latéral s'étendant axialement (14)
- la conception (S120) d'un alésage traversant (13) à travers l'induit (5) ; et
- l'insertion (S130) d'au moins une pièce de fermeture (7 ; 7a, 7b) dans l'induit, dans lequel l'induit (5) présente, après l'étape d'insertion (S130), une section (5a) faisant saillie axialement au-delà de la au moins une pièce de fermeture (7 ; 7a, 7b), et l'alésage traversant (13) est conçu dans la section faisant saillie (5a) pour diriger un flux d'air du premier raccord (1) vers le troisième raccord (3).

13. Procédé selon la revendication 12, dans lequel l'alésage traversant (13a) est un premier alésage traversant (13a) et la au moins une pièce de fermeture (7a, 7b) comprend une première pièce de fermeture (7a) et une deuxième pièce de fermeture (7b),
**caractérisé en ce que** le procédé comprend en outre :
la conception (S135) d'un deuxième alésage traversant (13b) dans une zone (5b) de l'induit (5) qui se situe axialement entre la première pièce de fermeture (7a) et la deuxième pièce de fermeture (7b).
